(19) Europäisches Patentamt / European Patent Office / Office européen des brevets

(11) **EP 3 101 793 B1**

(12) **FASCICULE DE BREVET EUROPEEN**

(45) Date de publication et mention de la délivrance du brevet:
**01.08.2018 Bulletin 2018/31**

(51) Int Cl.:
*H02M 1/36* *(2007.01)*          *H02M 3/156* *(2006.01)*

(21) Numéro de dépôt: **15170838.5**

(22) Date de dépôt: **05.06.2015**

(54) **CONVERTISSEUR DC-DC À DÉMARRAGE À BASSE PUISSANCE ET À BASSE TENSION**

GLEICHSTROM-GLEICHSTROM-WANDER MIT EINSCHALTUNG MIT GERINGER LEISTUNG UND NIEDRIGER SPANNUNG

DC-DC CONVERTER WITH LOW-POWER AND LOW-VOLTAGE STARTUP

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(43) Date de publication de la demande:
**07.12.2016 Bulletin 2016/49**

(73) Titulaire: **EM Microelectronic-Marin SA**
**2074 Marin (CH)**

(72) Inventeurs:
• **Théoduloz, Yves**
**1400 Yverdon (CH)**
• **Saby, Jérôme**
**2000 Neuchâtel (CH)**
• **Marti, Cyril**
**2523 Lignières (CH)**

(74) Mandataire: **Giraud, Eric et al**
**ICB**
**Ingénieurs Conseils en Brevets SA**
**Faubourg de l'Hôpital 3**
**2001 Neuchâtel (CH)**

(56) Documents cités:
**US-A1- 2012 049 823**

**Description**

DOMAINE DE L'INVENTION

L'invention concerne un convertisseur DC-DC à démarrage à très basse puissance et très basse tension fonctionnant en mode discontinu. Le convertisseur DC-DC comprend une inductance reliée à une source de d'énergie, qui est une source de tension, un commutateur lié à l'inductance et commandé par un contrôleur et un élément sous forme de diode lié à un noeud de connexion de l'inductance et du commutateur pour fournir une tension de sortie.

L'invention concerne également un procédé de mise en action d'un convertisseur DC-DC à démarrage à très basse puissance et très basse tension.

ARRIERE PLAN DE L'INVENTION

Un convertisseur DC-DC inductif du type Boost, comme décrit dans le brevet EP 2 104 213 B1, est généralement utilisé dans des circuits électroniques à faible consommation de manière à fournir une tension de sortie d'un niveau plus élevé que la tension d'entrée. Cependant la tension d'entrée ne peut être très basse pour permettre une conversion à moins d'utiliser un transformateur en entrée, ce qui est coûteux et complique singulièrement la réalisation d'un tel convertisseur DC-DC. Avec tout convertisseur DC-DC de l'état de la technique, il n'est donc pas envisageable sans complication de fournir une tension de sortie suffisante pour alimenter des composants électroniques d'un circuit sur la base d'une très faible tension et puissance d'une source de tension.

Pour un convertisseur DC-DC traditionnel du type Boost, la tension d'entrée doit en général être supérieure à 0.6 V pour pouvoir fournir une tension de sortie suffisante. Un tel convertisseur DC-DC peut comprendre une inductance liée aux drains d'un transistor PMOS et d'un transistor NMOS, qui agissent comme des commutateurs. Les transistors PMOS et NMOS sont reliés en série entre la borne de sortie du convertisseur et la borne de masse. L'inductance L est disposée entre une borne positive de la source de tension continue, et un noeud de connexion des bornes de drain des deux transistors du convertisseur. La borne de source du transistor NMOS est reliée à une borne de masse, alors que la borne de source du transistor PMOS est reliée à une borne de sortie fournissant la tension de sortie.

Les transistors PMOS et NMOS sont commandés chacun de manière alternative par un signal de commande respectif sur leur borne de grille respective. Le transistor NMOS est tout d'abord rendu conducteur pour faire croître linéairement un courant dans l'inductance dans une première phase, alors que le transistor PMOS est rendu conducteur dans une seconde phase suivant la première phase pour faire décroître le courant dans l'inductance vers la sortie du convertisseur, jusqu'à une valeur nulle, et ainsi fournir une tension de sortie continue.

Le convertisseur DC-DC traditionnel comprend des composants comme des sources de courant ou comparateurs ou amplificateurs nécessitant une tension d'alimentation d'au moins 0.6 V pour leur fonctionnement. Ce type de convertisseur n'est pas en mesure de démarrer et de fonctionner avec une tension d'entrée très basse, qui pourrait servir à alimenter également directement les composants du convertisseur, ce qui constitue un inconvénient.

On peut citer encore l'article intitulé "Energy Harvesters and Energy Processing Circuits" de Yogesh Ramadass de Texas Instrument dans le Tutorial 2013 T3 du 17 février 2013 de Institute of Electrical and Electronics Engineers of University of Pennsylvania ISSCC. Il est décrit dans cet article aux pages 61 à 68 une forme d'un convertisseur DC-DC à ultra basse tension à démarrage à froid ("cold start" en terminologie anglaise). Le convertisseur peut être alimenté directement par la tension d'entrée fournie par une source de tension continue. Cependant l'impédance d'entrée n'est pas contrôlée dans le convertisseur pour permettre un démarrage à plus basse tension notamment quand la tension d'entrée chute, ce qui constitue un inconvénient. De plus, il n'est pas prévu d'effectuer un démarrage à très basse puissance, ce qui constitue un autre inconvénient.

La demande de brevet US 2012/0049823 A1 décrit un dispositif de commutation de l'alimentation en puissance d'un convertisseur DC-DC. Il comprend un circuit oscillateur, qui régule la fréquence de commutation d'un commutateur lié à une inductance pour la conversion d'une tension d'entrée en une tension de sortie. Le circuit oscillateur est lié à une unité de contrôle, qui commande un circuit d'entraînement pour fermer ou ouvrir le commutateur sur la base d'un signal provenant de l'oscillateur dans une période d'initialisation. Ce dispositif ne permet pas de convertir une faible tension d'entrée en une tension de sortie utilisable pour alimenter un circuit électronique.

RESUME DE L'INVENTION

L'invention a donc pour but de pallier les inconvénients de l'état de la technique en fournissant un convertisseur DC-DC à démarrage à basse puissance et basse tension, qui est capable d'adapter son impédance d'entrée, afin d'éviter une trop forte chute de tension à la sortie de la source d'énergie, lorsque celle-ci est de très faible puissance.

A cet effet, l'invention concerne un convertisseur DC-DC à démarrage à basse puissance et basse tension cité ci-devant, qui comprend les caractéristiques définies dans la revendication indépendante 1.

Des formes d'exécution particulière du convertisseur DC-DC sont définies dans les revendications dépendantes 2 à 19.

Un avantage du convertisseur DC-DC selon l'invention réside dans le fait qu'il permet de convertir une faible tension d'entrée, qui peut être depuis environ 200 mV mais au moins de l'ordre de 300 mV en une tension de sortie, qui est utilisable pour alimenter un circuit électronique conventionnel et de l'ordre de 1.5 V à 3 V. Une simple inductance est utilisée sans l'utilisation d'un transformateur à deux inductances couplées magnétiquement et avec un certain rapport de transformation. Ceci peut être réalisé même si la puissance maximum, qui peut être délivrée par une source de tension d'entrée est faible. La source de tension continue branchée au convertisseur DC-DC peut être du type générateur électrique thermique ou une cellule photovoltaïque à une seule jonction. Cette cellule photovoltaïque peut permettre un démarrage d'un circuit électronique lors d'une faible condition d'illumination.

Avantageusement, le convertisseur DC-DC est capable d'opérer une adaptation d'impédance en entrée, et donc une auto-adaptation de puissance de manière à pouvoir convertir une très faible tension d'entrée en une tension de sortie suffisante pour l'alimentation de composants électroniques d'un circuit. Le convertisseur DC-DC comprend donc un contrôleur pour commander un transistor MOS. Ce transistor MOS peut être relié en série à une seule inductance d'entrée, qui est reliée directement à une source d'énergie électrique, qui est une source de tension d'entrée. Le contrôleur est alimenté directement par la source de tension d'entrée. Le convertisseur DC-DC comprend encore un élément sous forme de diode, telle qu'une diode Schottky, qui est relié au noeud de connexion entre l'inductance et le transistor MOS, et fournissant la tension de sortie du convertisseur DC-DC. Le contrôleur permet ainsi de rendre conducteur le transistor MOS dans une première phase d'une première durée Tn, et non conducteur après la première durée Tn et jusqu'au terme d'une durée T d'un cycle de commutation. Le rapport cyclique d entre la première durée Tn et la durée T d'un cycle diminue, lorsque la tension d'entrée chute à une très basse tension tout en augmentant l'impédance d'entrée du convertisseur DC-DC.

Avantageusement, le contrôleur est alimenté directement par la source de tension d'entrée. Aucun autre courant de polarisation n'est nécessaire avec la configuration du contrôleur. Comme le convertisseur DC-DC est configuré avec de simples éléments pouvant fonctionner à une faible tension, il n'est donc pas envisageable d'utiliser un traditionnel algorithme MPPT ("Maximum Power Point Tracking" en terminologie anglaise).

Avantageusement, le contrôleur du convertisseur DC-DC comprend un oscillateur, tel qu'un oscillateur en anneau, dont le signal d'oscillation a une période d'oscillation déterminant la durée T d'un cycle de commutation. Le contrôleur comprend encore un élément monostable lié à l'oscillateur, déterminant un signal de commande pour le transistor pour le rendre conducteur pendant une première durée Tn à chaque cycle de commutation. La durée T d'un cycle augmentant plus vite que la première durée Tn lors d'une baisse de tension d'entrée, cela conduit à diminuer le rapport cyclique d = Tn/T aux basses tensions d'entrée, ce qui est désiré avec le convertisseur DC-DC de la présente invention. Le convertisseur DC-DC opère ainsi à un point de fonctionnement d'équilibre, qui est dépendant de la puissance de sortie de la source de tension d'entrée, qui peut être faible.

A cet effet, l'invention concerne également un procédé de mise en action d'un convertisseur DC-DC, qui comprend les caractéristiques de la revendication indépendante 20.

Des étapes particulières du procédé sont définies dans les revendications dépendantes 21 et 22.

## BREVE DESCRIPTION DES DESSINS

Les buts, avantages et caractéristiques du convertisseur DC-DC à démarrage à basse puissance et basse tension, et du procédé de mise en action du convertisseur apparaîtront mieux dans la description suivante sur la base d'au moins une forme d'exécution du convertisseur non limitative illustrée par les dessins sur lesquels :

la figure 1 représente un circuit avec un convertisseur DC-DC de type Boost selon l'invention,

la figure 2 représente un schéma de principe du convertisseur DC-DC lié à une source d'énergie pour fournir une tension de sortie pour une charge selon l'invention avec les courbes de fonction du courant moyen d'entrée par rapport à la tension d'entrée et le point d'équilibre,

la figure 3 représente des courbes illustrant le point d'équilibre entre la courbe du courant moyen de la source d'énergie par rapport à sa tension de sortie et la courbe de la relation entre le courant moyen d'entrée et la tension d'entrée du convertisseur DC-DC, et la puissance d'entrée,

la figure 4 représente une forme d'exécution du convertisseur DC-DC avec les composants du contrôleur pour l'adaptation d'impédance en entrée en fonction de la tension d'entrée selon l'invention,

la figure 5 représente une forme d'exécution d'un oscillateur du contrôleur du convertisseur DC-DC selon l'invention,

la figure 6 représente une forme d'exécution d'un élément monostable du contrôleur du convertisseur DC-DC selon l'invention,

la figure 7 représente une forme d'exécution d'un générateur de phases du contrôleur du convertisseur DC-DC selon l'invention,

la figure 8 représente une forme d'exécution d'une pompe de charge interne du contrôleur du convertisseur DC-DC selon l'invention,

la figure 9 représente des graphiques des signaux dans les différents composants du contrôleur du convertisseur DC-DC selon l'invention, ainsi que le graphique du courant à travers l'inductance sur une durée de chaque cycle de commutation, et

la figure 10 représente des courbes représentant la variation de la première durée Tn, de la durée T d'un cycle de commutation et du rapport cyclique d par rapport à la tension d'entrée du convertisseur DC-DC selon l'invention.

## DESCRIPTION DETAILLEE DE L'INVENTION

Dans la description suivante, tous les éléments du convertisseur DC-DC fonctionnant en mode discontinu, qui sont bien connus de l'homme du métier dans ce domaine technique ne seront relatés que de manière simplifiée. Le convertisseur DC-DC est prévu pour convertir une très basse tension d'entrée en une tension de sortie suffisante pour l'alimentation de composants électroniques d'un circuit.

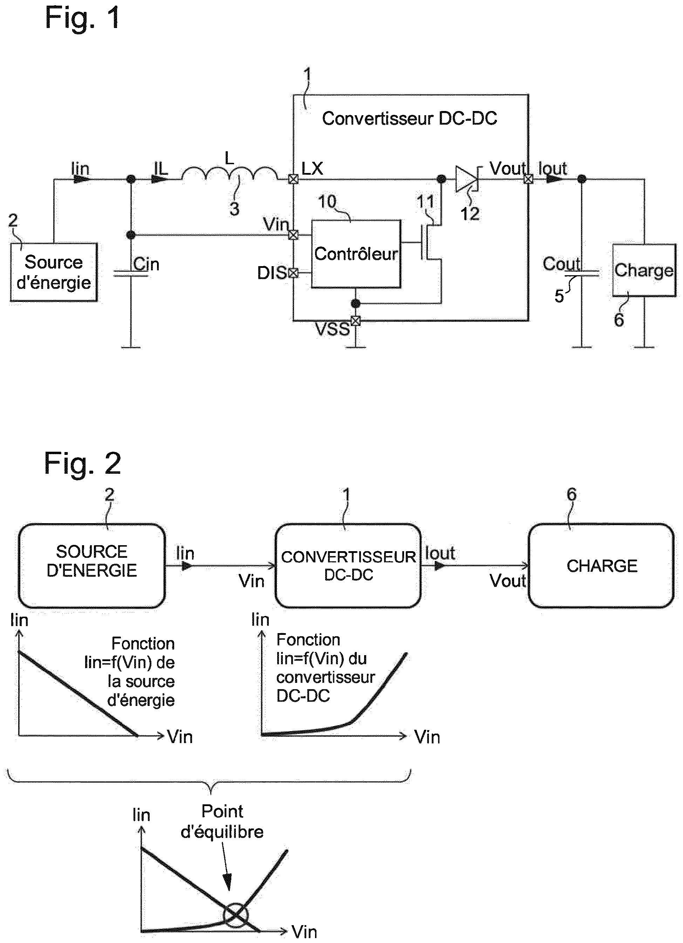

A la figure 1, il est représenté schématiquement un convertisseur DC-DC du type Boost 1, c'est-à-dire un convertisseur élévateur de tension avec un niveau de la tension de sortie Vout supérieur au niveau de la tension d'entrée continue Vin. Ce convertisseur DC-DC peut démarrer ou fonctionner à une très faible tension d'entrée et très faible puissance dans un mode discontinu. Une adaptation d'impédance est effectuée en entrée en fonction de la tension d'entrée du convertisseur DC-DC comme expliqué ci-après. L'impédance augmente quand la tension d'entrée diminue.

Le convertisseur DC-DC comprend tout d'abord une inductance L 3, qui n'est pas représentée dans le bloc principal du convertisseur étant donné que l'inductance 3 n'est pas intégrée avec les autres composants électroniques du convertisseur. Cette seule inductance L utilisée, est reliée d'un côté à une source d'énergie 2, qui est une source de tension continue, et d'un autre côté à un commutateur 11, qui est de préférence un transistor MOS 11 dans le bloc principal du convertisseur. Ce transistor MOS 11 est de préférence un transistor NMOS, dont la source est reliée à la borne de masse VSS et le drain est relié à l'inductance L par une borne d'inductance LX du bloc principal du convertisseur DC-DC 1.

Le convertisseur DC-DC 1 comprend encore un contrôleur 10 pour commander le transistor NMOS 11 par sa grille, et un élément sous forme de diode 12, qui peut être de préférence une diode Schottky. Cet élément sous forme de diode 12 est connecté au noeud de connexion entre l'inductance 3 et le transistor NMOS 11 pour fournir une tension de sortie par une borne de sortie Vout. Cette diode 12 est bien entendu disposée pour fournir un courant positif Iout, c'est-à-dire en direction de la sortie Vout à une charge 6 en parallèle à un condensateur de stockage 5 Cout. Cette diode 12 empêche un courant de rentrer dans le convertisseur DC-DC depuis la sortie Vout, et évite de décharger le condensateur de stockage 5 Cout. Ce condensateur Cout du convertisseur 1 est également placé en dehors du bloc principal du convertisseur étant donné qu'il n'est pas intégré avec les autres composants électroniques dudit bloc principal, ce qui peut être aussi le cas pour la diode Schottky 12.

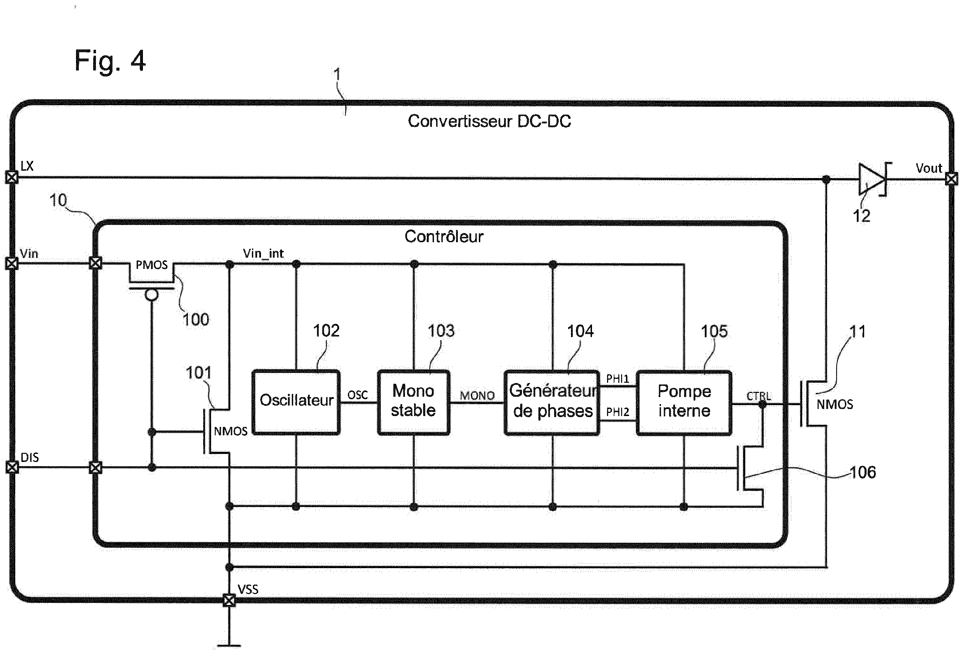

Pour pouvoir augmenter l'impédance en entrée du convertisseur DC-DC 1, quand la tension d'entrée Vin diminue, il est contrôlé une première durée Tn d'enclenchement du transistor NMOS 11 par rapport à une période T d'un cycle de commutation du transistor NMOS comme expliqué par la suite en référence aux figures 4 à 10. Cela définit un courant moyen Iin tiré par le convertisseur DC-DC. Quand la tension d'entrée Vin diminue, le rapport cyclique d = Tn/T diminue au moins dans une gamme de tension d'entrée Vin basse notamment à partir d'un premier seuil de tension. Avec la diminution du rapport cyclique d, une augmentation d'impédance en entrée est obtenue, ce qui est recherché par la présente invention. Ainsi, le courant moyen Iin tiré par le convertisseur 1 est adapté au courant que peut délivrer la source d'énergie 2.

Il est encore à noter que le convertisseur DC-DC 1 comprend un condensateur d'entrée Cin de grande dimension par exemple de l'ordre de 10 μF relié à la sortie de la source de tension 2, qui est également reliée à une borne d'entrée Vin du bloc principal du convertisseur DC-DC 1. Ce condensateur d'entrée Cin permet de filtrer les variations de courant lors de la commutation du transistor NMOS 11 pour le passage du courant IL à travers l'inductance 3. Cela permet de garder une tension d'entrée Vin relativement constante et un courant moyen d'entrée Iin défini. Ainsi le contrôleur 10 est directement alimenté par la tension d'entrée Vin fournie par la source de tension 2. Les composants, que comprend le contrôleur 10, sont capables de fonctionner à une très faible tension par exemple depuis 200 mV, mais de préférence au moins à 300 mV, et également à très faible puissance par exemple en dessous de 1 μWatt, étant donné que le circuit entier avec la charge en sortie peut démarrer avec 3 μWatt.

Les composants du bloc principal du convertisseur DC-DC 1 sont avantageusement réalisés dans un circuit intégré dans une technologie CMOS ALP à 0.18 μm. Les différents éléments du contrôleur 10, expliqués en détail ci-après en référence à la figure 4, sont composés de transistors PMOS, NMOS, de résistances et condensateurs obtenus dans cette technologie et dont les dimensions des transistors sont adaptées de manière à augmenter l'impédance d'entrée du convertisseur quand la tension d'entrée chute.

La figure 2 représente un schéma de principe du convertisseur DC-DC 1 lié en entrée à une source d'énergie 2 pour fournir une tension de sortie Vout avec un courant de sortie Iout pour une charge 6 selon l'invention. Un courant moyen Iin est fourni en sortie de la source d'énergie 2, qui est de préférence une source de tension, avec une tension d'entrée du convertisseur DC-DC à Vin. Cette source d'énergie peut être du type générateur électrique thermique ou une cellule photovoltaïque à une seule jonction.

Pour une source d'énergie 2, telle qu'un générateur électrique thermique, on peut modéliser son fonctionnement avec une source de tension interne reliée à une résistance interne non représentée, par laquelle la tension de sortie Vin de la source d'énergie diminue en fonction de l'augmentation du courant sortant Iin. La source d'énergie peut fournir une tension à vide de l'ordre de 0.35 V avec une résistance interne de l'ordre de 2 kOhms par exemple. Dans ce cas de figure, la première courbe de la fonction Iin = f(Vin) est représentée pour montrer la variation du courant Iin par rapport à la tension Vin de la source d'énergie.

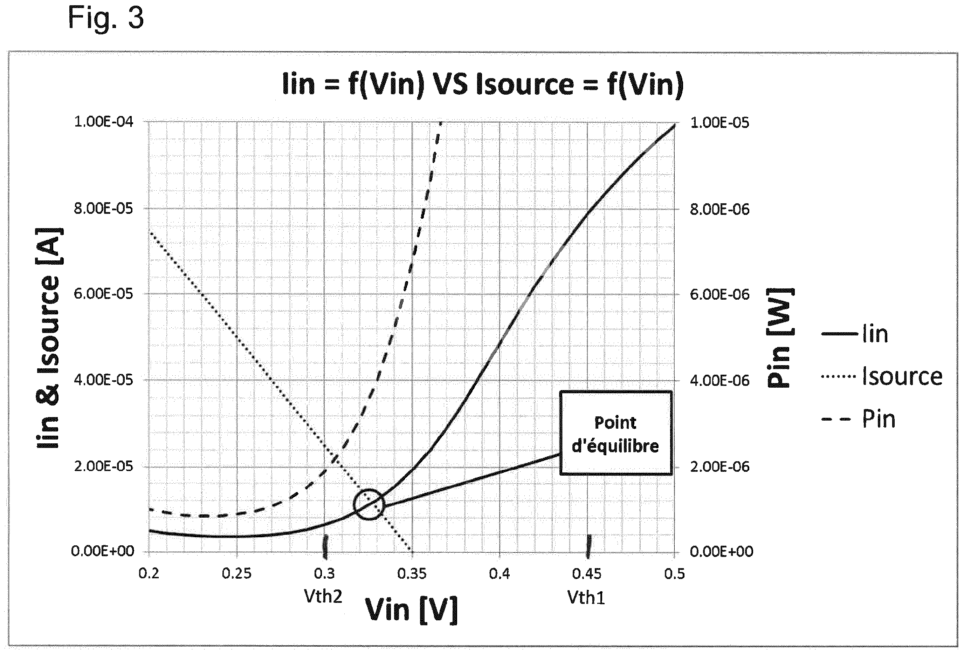

En contrepartie, la seconde courbe de la fonction Iin = f(Vin) relatant le fonctionnement dans le convertisseur DC-DC 1, montre que le courant moyen d'entrée Iin diminue de manière non linéaire, quand la tension d'entrée Vin diminue. Une forte diminution du courant Iin intervient pour une diminution de la tension d'entrée Vin au-dessous d'une valeur seuil, qui est un premier seuil de tension Vth1. Cette forte diminution du courant Iin intervient au moins jusqu'à la tension d'entrée Vin au point d'équilibre et à proximité d'un second seuil de tension Vth2 comme montré à la figure 3. Une plus faible diminution du courant Iin intervient pour une diminution de la tension d'entrée Vin au-dessus du premier seuil de tension bas Vth1 et également au-dessous du point d'équilibre. Cela signifie que l'impédance d'entrée du convertisseur DC-DC 1 augmente lors d'une chute de tension d'entrée Vin vers le point d'équilibre comme attendu par la présente invention. Le convertisseur DC-DC diminuera ainsi automatiquement l'appel du courant moyen d'entrée Iin, quand la tension d'alimentation d'entrée Vin diminue.

Comme il peut être montré par la combinaison des deux courbes sur le dernier graphe de la figure 2, l'ensemble composé de la source d'énergie 2 et du convertisseur DC-DC 1 se stabilisera à un point de fonctionnement d'équilibre au croisement des deux courbes. Ceci dépend de la puissance de sortie de la source d'énergie, qui peut être faible pour le fonctionnement du convertisseur DC-DC.

Comme représenté de manière plus détaillée à la figure 3, les deux courbes des fonctions Iin = f(Vin) de la source d'énergie et du convertisseur DC-DC sont montrées. Comme le convertisseur DC-DC est prévu pour fonctionner à très faible tension et puissance, on note que le point d'équilibre du croisement des deux courbes se situe par exemple à une valeur de tension d'entrée Vin de l'ordre de 0.33 V avec un courant moyen d'entrée de l'ordre de 10 μA. Cela donne également une puissance d'entrée de l'ordre de 3 μWatt. Cette puissance d'entrée peut donc être très faible pour le fonctionnement du convertisseur DC-DC, ce qui est attendu par la présente invention.

Bien entendu, les valeurs numériques indiquées ci-dessus sont indiquées uniquement en tant qu'exemple pour le convertisseur DC-DC 1 de la présente invention. Il peut être envisagé un point d'équilibre à une valeur d'entrée Vin supérieure ou inférieure avec un courant moyen Iin supérieur ou inférieur sans limiter la portée de la présente invention.

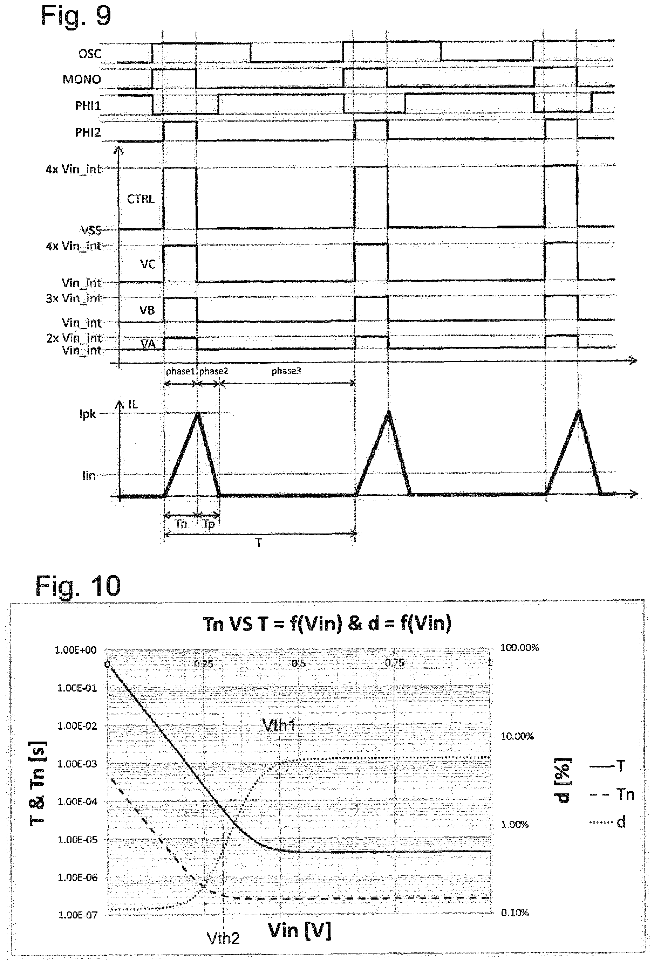

En référence notamment aux figures 1 et 9, il est maintenant décrit le fonctionnement en mode discontinu du convertisseur DC-DC 1 de la présente invention. Dans une première phase d'une première durée ou premier temps Tn, le commutateur 11, c'est-à-dire le transistor NMOS, est rendu conducteur par le contrôleur 10. Cela induit un courant à travers l'inductance 3 du convertisseur DC-DC. Le courant IL, provenant de la source de tension 2, va croître dans l'inductance pendant toute la première durée Tn jusqu'à une valeur pic définie comme Ipk. Le courant dans un cas de figure idéal croît linéairement pendant la première durée Tn. Au terme de cette première durée Tn, le transistor NMOS est commandé par le contrôleur 10 pour le rendre non conducteur et ceci jusqu'au terme d'un cycle de commutation de durée T.

Dans une seconde phase suivant la première phase avec le transistor NMOS 11 rendu non-conducteur, le courant induit dans l'inductance 3 est transféré comme courant de sortie Iout dans la charge 6 et le condensateur de stockage 5 Cout par l'intermédiaire de l'élément sous forme de diode 12, qui est de préférence une diode Schottky. Dans cette seconde phase de seconde durée ou second temps Tp, le courant dans l'inductance diminue en passant par la diode Schottky 12 pour pouvoir obtenir une tension de sortie Vout. Au terme de cette seconde durée Tp, le courant à travers l'inductance devient nul. La tension de sortie Vout augmente jusqu'à obtenir une tension de sortie stabilisée après plusieurs cycles de commutation. Cette tension de sortie Vout est ainsi supérieure à la tension d'entrée Vin.

Une fois que le courant dans l'inductance 3 est nul, la troisième phase commence. Cette troisième phase peut être considérée comme neutre avec aucun courant, qui entre ou sort du convertisseur DC-DC. La diode Schottky 12 empêche la charge 6 et le condensateur de stockage 5 de se décharger vers l'entrée du convertisseur DC-DC 1 dans la source d'énergie 2. La durée des trois phases définit donc la période ou durée T d'un cycle de commutation. Plusieurs cycles de commutation successifs sont donc répétés indéfiniment pour obtenir une tension de sortie Vout stabilisée. Cependant une fois que la tension de sortie Vout est stabilisée et suffisante pour l'alimentation d'un circuit relié au convertisseur DC-DC, une unité externe peut commander l'arrêt dudit convertisseur DC-DC en activant l'entrée DIS du convertisseur DC-DC 1. Il peut ainsi être prévu d'utiliser un autre convertisseur DC-DC plus efficace et qui permet l'exécution d'un algorithme dit MPPT une fois enclenché.

Le rapport entre la période T d'un cycle de commutation et la première durée Tn est primordial pour influer sur le courant moyen Iin, qui sera transféré de la source d'énergie 2 vers la charge 6 en sortie du convertisseur DC-DC 1. Ce rapport est appelé le rapport cyclique d = Tn/T. Ce courant moyen d'entrée Iin est principalement le courant, qui passe dans l'inductance 3, mais il concerne également dans une faible mesure une partie du courant de fonctionnement du contrôleur 10. Ce courant moyen Iin est principalement défini par la surface sous la courbe triangulaire du courant IL à travers l'inductance 3, comme montré à la figure 9, pendant les première et seconde durées Tn et Tp, divisée par la période totale T d'un cycle de commutation.

A ce titre, on peut définir une première équation :

$$Iin = Ipk \cdot (Tn + Tp)/(2 \cdot T)$$

Le courant pic ou crête Ipk, qui est induit dans l'inductance 3 durant la première phase de première durée Tn, est dépendant de la valeur propre de l'inductance L, du temps Tn et de la tension d'entrée Vin comme indiqué ci-dessous dans une seconde équation :

$$Ipk = Vin \cdot Tn/L$$

La seconde durée Tp dépend du courant pic Ipk, de la valeur de l'inductance L et de la différence entre la tension de sortie Vout et de la tension d'entrée Vin en tenant compte également de la chute de tension Vd à travers la diode Schottky 12. Une troisième équation peut être définie comme suit :

$$Tp = Ipk \cdot L/(Vout - Vd - Vin)$$

En introduisant la seconde équation dans la troisième équation, on obtient la quatrième équation suivante :

$$Tp = Vin \cdot Tn/(Vout - Vd - Vin)$$

En introduisant les seconde et quatrième équations dans la première équation, on obtient la cinquième équation suivante :

$$Iin = (Vin \cdot Tn^2/(2 \cdot L \cdot T)) \cdot (1 + (Vin/(Vout - Vd - Vin)))$$

Comme le rapport cyclique d est égal à Tn/T, on obtient finalement la sixième équation suivante :

$$Iin = (Vin \cdot d \cdot Tn/(2 \cdot L)) \cdot (1 + (Vin/(Vout - Vd - Vin)))$$

Ce courant moyen Iin est le courant tiré par le convertisseur DC-DC 1 sur la source d'énergie 2. Il dépend donc de la tension d'entrée Vin, du rapport cyclique d, qui dépend des composants du contrôleur expliqués plus en détail ci-après en référence aux figures 4 à 6, de la première durée Tn, de la valeur L de l'inductance 3, de la tension de sortie Vout et de la chute de tension Vd à travers la diode Schottky 12. On constate donc que la première durée Tn, ainsi que le rapport cyclique d sont importants pour adapter le courant moyen Iin au courant que la source d'énergie 2 peut délivrer et donc permettre le fonctionnement du convertisseur DC-DC à très faible tension et très faible puissance.

Grâce au contrôleur 10 et comme montré à la figure 3, le courant Iin, que le convertisseur DC-DC 1 tire de la source d'énergie 2, baisse fortement, lorsque la tension délivrée par la source d'énergie 2 chute, et ceci au moins dans une zone de basse tension d'entrée Vin et à un premier seuil de tension Vth1 défini. Cela permet d'avoir une source d'énergie 2, qui ne s'écroule pas totalement tout en permettant de délivrer encore de la puissance pour la conversion. Selon l'invention, le convertisseur DC-DC est configuré pour opérer une adaptation d'impédance en entrée. L'impédance d'entrée augmente quand la tension d'entrée chute ou diminue notamment à partir du premier seuil de tension. Le rapport cyclique d diminue également à partir de ce premier seuil de tension.

La figure 4 représente une forme d'exécution du contrôleur 10 dans le convertisseur DC-DC 1. Le contrôleur 10 comprend principalement un oscillateur 102, un élément monostable 103, un générateur de phases 104 et une pompe de charge interne 105, qui commande par le signal de commande CTRL le transistor NMOS 11. Tous ces composants sont alimentés directement par la tension d'entrée interne Vin_int, qui est directement la tension d'entrée Vin provenant de la source d'énergie, quand le commutateur d'entrée 100, qui est de préférence un transistor PMOS, est rendu conducteur. L'entrée DIS, qui est reliée à la grille du transistor PMOS 100, doit donc être commandée par une unité externe pour être à la masse VSS pour rendre conducteur le transistor PMOS 100 pour le bon fonctionnement du contrôleur 10.

Pour commander l'arrêt du contrôleur 10, il est nécessaire que l'entrée DIS soit placée à la tension d'entrée Vin ou une tension encore plus haute que Vin, pour rendre le transistor PMOS 100 non conducteur dans un mode de pause. De plus, un premier transistor NMOS 101, qui est relié entre la ligne de tension d'entrée interne Vin_int et la masse VSS, et un second transistor NMOS 106, qui est relié entre la grille du transistor NMOS 11 et la masse VSS, sont rendus conducteurs. Pour ce faire, les grilles des transistors NMOS 101 et 106 sont reliées à l'entrée DIS, qui est reliée à la tension d'entrée Vin ou une tension encore plus haute que Vin.

L'oscillateur 102 du contrôleur définit la période T d'un cycle de commutation du transistor NMOS 11, alors que l'élément monostable 103 définit la première durée Tn pendant laquelle le transistor NMOS 11 est rendu conducteur. Cela permet de définir le rapport cyclique d = Tn/T et détermine le courant moyen Iin tiré par le convertisseur DC-DC. L'oscillateur 102 fournit donc un signal d'oscillation OSC de période T à l'élément monostable 103 pour lui permettre de déterminer la première durée Tn. L'élément monostable 103 contrôle par un signal de contrôle MONO le générateur de phases 104, qui fournit de manière traditionnelle, deux signaux de phase PHI1 et PHI2 pour contrôler la pompe de charge interne 105. Sur la base des deux signaux de phase PHI1 et PHI2 non recouvrant, la pompe de charge 105 multiplie la tension crête du signal de commande CTRL de la grille du transistor NMOS 11 pour assurer une bonne conductivité du transistor NMOS 11 durant la première période Tn. La figure 9 représente justement les différents signaux dans le convertisseur DC-DC et également les différents niveaux de tension VA, VB, VC de la pompe de charge interne 105.

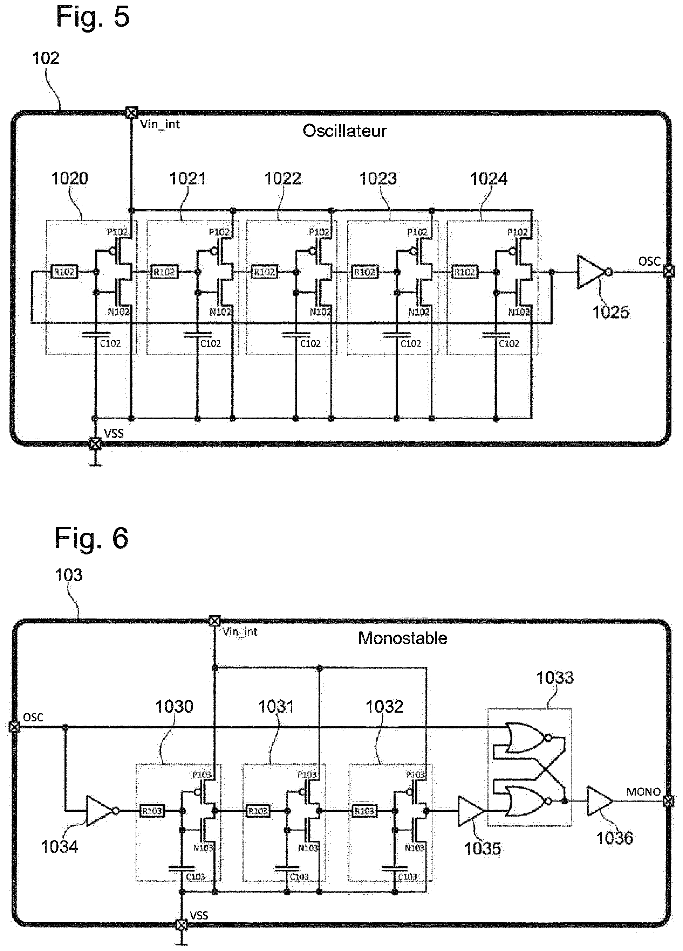

La figure 5 représente une forme d'exécution de l'oscillateur 102 du contrôleur. Cet oscillateur est de préférence un oscillateur en anneau, qui se base sur le temps de commutation d'un ou plusieurs inverseurs. Pour ce faire, l'oscillateur en anneau comprend un nombre impair N d'étages à inverseur successifs 1020 à 1024. Chaque étage est composé également d'un réseau RC avec la résistance R102 et le condensateur C102, lié à un inverseur correspondant. Il est ainsi possible d'obtenir un signal d'oscillation OSC en sortie de l'oscillateur de période T d'un cycle de commutation. La durée de commutation de chaque inverseur en liaison au réseau RC correspondant est bien entendu dépendant des paramètres technologiques de l'intégration du convertisseur DC-DC.

Comme indiqué ci-devant, l'oscillateur 102 comprend donc N étages à inverseur 1020, 1021, 1022, 1023 et 1024 connectés successivement les uns aux autres avec la sortie du dernier étage à inverseur 1024 relié à l'entrée du premier étage à inverseur 1020 pour fermer la boucle. Le nombre N d'étages à inverseur doit bien entendu être un nombre entier impair pour le fonctionnement de l'oscillateur en anneau. Il peut être envisagé que ce nombre N est égal à 5, mais peut aussi être d'une autre valeur en fonction de la période d'oscillation désirée. Le signal d'oscillation OSC de période T est fourni à la sortie d'un inverseur de sortie 1025 relié à la sortie du dernier étage à inverseur 1024. Tous les inverseurs 1020 à 1025 sont alimentés directement par la tension d'entrée interne Vin_int, qui correspond à la tension d'entrée Vin lors du fonctionnement du convertisseur DC-DC.

Chaque inverseur des étages 1020 à 1024 de l'oscillateur 102 est composé traditionnellement d'un transistor PMOS P102 monté en série avec un transistor NMOS N102 entre la borne de tension d'entrée interne Vin_int et la borne de masse VSS. Une résistance R102 relie la sortie d'un inverseur précédent et les grilles des transistors P102 et N102. La sortie de chaque inverseur est le noeud de connexion des drains des transistors P102 et N102. Un condensateur C102 est également relié entre les grilles reliées des transistors P102 et N102 et la borne de masse VSS pour définir le réseau RC avec la résistance R102.

Chaque inverseur 1020 à 1024 avec leur réseau RC, qui est composé de la résistance R102 et du condensateur C102, génère donc un délai et la somme des délais détermine la période d'oscillation T du signal d'oscillation OSC. Lorsque la tension d'entrée interne Vin_int est élevée, la résistivité des transistors PMOS P102 et des transistors NMOS N102 est négligeable par rapport à la résistance R102 du réseau RC avec le condensateur C102. Ainsi la période T d'oscillation ne dépend pas de la résistivité des transistors P102 et N102. Par contre quand la tension d'entrée interne diminue la résistivité des transistors PMOS P102 et NMOS N102 augmente et dévient prépondérante par rapport à la résistance R102 et ceci notamment dans une zone de faible tension d'entrée par exemple à partir d'un premier seuil de tension Vth1, qui peut être de l'ordre de 0.45 V comme montré à la figure 10. La période d'oscillation T va donc augmenter à basse tension.

La figure 6 représente une forme d'exécution de l'élément monostable 103, qui est commandé par le signal d'oscillation OSC de l'oscillateur. L'élément monostable comprend principalement un certain nombre M d'étages de délai 1030, 1031, 1032 connectés les uns après les autres pour la détermination de la première durée Tn d'enclenchement du transistor NMOS 11 du convertisseur montré à la figure 4. Le nombre M d'étages de délai est un nombre entier supérieur ou égal 1. Ce nombre M peut être égal à 3, mais bien entendu il peut être prévu un nombre d'étages supérieur ou inférieur en fonction de la durée Tn d'enclenchement souhaitée du transistor NMOS 11 montré à la figure 4.

Chaque étage de délai comprend un inverseur, qui est composé traditionnellement d'un transistor PMOS P103 monté en série avec un transistor NMOS N103 entre la borne de tension d'entrée interne Vin_int et la borne de masse VSS, ainsi qu'un réseau RC en entrée. Pour le réseau RC, une résistance R103 est placée entre l'entrée de chaque étage et les grilles reliées des transistors P103 et N103. La sortie de chaque inverseur est le noeud de connexion des drains des transistors P103 et N103. Un condensateur C103 est également relié entre les grilles reliées des transistors P103 et N103 et la borne de masse VSS et définit le réseau RC avec la résistance R103.

Le premier étage de délai 1030 reçoit le signal d'oscillation OSC provenant de l'oscillateur par l'intermédiaire d'un inverseur d'entrée 1034. Le signal d'oscillation OSC est aussi fourni directement à une première entrée d'une bascule du type RS 1033, alors qu'une seconde entrée de la bascule RS est reliée à la sortie du dernier étage de délai 1032 par l'intermédiaire d'un non-inverseur intermédiaire 1035. La bascule RS est formée par exemple de deux portes logiques NON-OU. La sortie de la bascule RS 1033 fournit le signal de contrôle MONO par l'intermédiaire d'un non-inverseur de sortie 1036.

Comme montré également à la figure 9, lors d'un flan montant du signal d'oscillation OSC, la bascule RS 1033 de l'élément monostable 103 force le signal de contrôle MONO au niveau logique à "1". Parallèlement, le signal d'oscillation OSC se propage à travers les étages à délai 1030 à 1032, qui sont des inverseurs à réseau RC. La somme des délais des inverseurs 1030 à 1032, ainsi qu'éventuellement un retard lié au générateur de phases et à la pompe de charge, qui suivent, définissent la première durée Tn d'enclenchement du transistor NMOS 11 montré à la figure 4. Suite à la commande du dernier étage à délai 1032 à la seconde entrée de la bascule RS 1033, le signal de contrôle MONO passe au terme de la première durée Tn au niveau logique à "0" jusqu'au terme de la période T d'un cycle de commutation, qui est défini par la période T du signal d'oscillation OSC.

Comme expliqué précédemment pour l'oscillateur, quand la tension d'entrée interne Vin_int est élevée, la résistivité des transistors PMOS P103 et des NMOS N103 est négligeable par rapport la résistance R103 du réseau RC. Ainsi le délai de chaque étage de délai 1030, 1031 et 1032 ne dépend pas de la résistivité des transistors P103 et N103. Par contre quand la tension d'entrée interne diminue la résistivité des transistors PMOS P103 et NMOS N103 augmente et devient prépondérante par rapport à la résistance R103 et ceci notamment dans une zone de faible tension d'entrée par exemple à partir d'un second seuil de tension Vth2, qui peut être de l'ordre de 0.3 V comme montré également à la figure 10. La première durée Tn va donc augmenter à basse tension notamment en dessous de 0.3 V.

Il est encore à noter que le rapport cyclique d = Tn/T diminue fortement au moins depuis le premier seuil de tension Vth1 et jusqu'en dessous du second seuil de tension Vth2 comme montré à la figure 10.

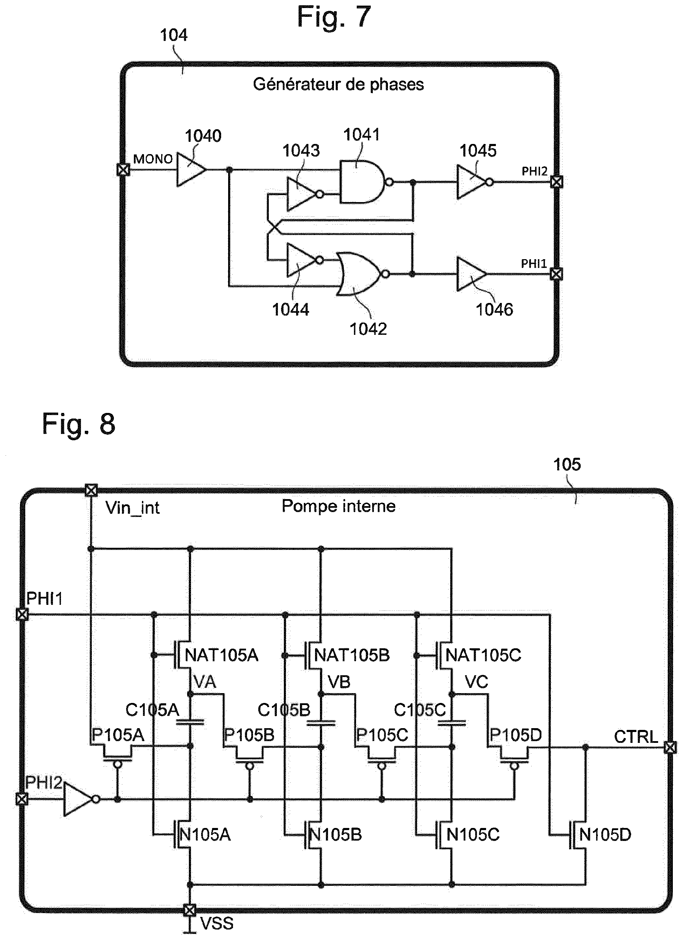

La figure 7 représente une forme d'exécution d'un générateur de phases 104, qui est commandé par le signal de contrôle MONO de l'élément monostable. Les composants de ce générateur bien connu sont également alimentés directement par la tension d'entrée interne Vin_int.

Le générateur 104 comprend tout d'abord un non-inverseur d'entrée 1040, qui reçoit le signal de contrôle MONO de l'élément monostable. La sortie du non-inverseur 1040 est reliée d'une part à une première entrée d'une porte NON-ET 1041, et d'autre part à une première entrée d'une porte NON-OU 1042. La sortie de la porte NON-ET 1041 est reliée par l'intermédiaire d'un inverseur 1044 à une seconde entrée de la porte NON-OU 1042. La sortie de la porte NON-OU 1042 est reliée par l'intermédiaire d'un inverseur 1043 à une seconde entrée de la porte NON-ET 1041. La sortie de la porte NON-OU 1042 fournit un signal à travers un non-inverseur de sortie 1046, qui fournit le premier signal de phase PHI1. Finalement la sortie de la porte NON-ET fournit un signal à travers un inverseur de sortie 1045, qui fournit le second signal de phase PHI2.

Comme représenté à la figure 9, le premier signal de phase PHI1 passe d'un état logique "1" à un état logique "0" au flan montant du signal d'oscillation OSC de l'oscillateur, lorsque le signal de contrôle MONO passe à l'état logique "1. Cet état logique "0" du premier signal de phase PHI1 se termine à la fin de la seconde durée Tp au terme de la seconde phase. Le second signal de phase PHI2 passe d'un état logique "0" à un état logique "1" au début de la mise en conduction du transistor NMOS 11 de la figure 4 et pendant toute la première durée Tn d'enclenchement dudit transistor NMOS 11.

La figure 8 représente la pompe de charge interne 105, qui est commandée par les deux signaux de phase PHI1 et PHI2 provenant du générateur de phases. Trois étages élévateurs se référant à la tension d'entrée Vin_int sont prévus avant la fourniture du signal de commande CTRL référé par rapport à la masse VSS pour commander le transistor NMOS 11 de la figure 4. Chaque étage comprend deux transistors NMOS, qui sont montés en série avec un condensateur, et un transistor PMOS. Les signaux VA, VB, VC, CTRL de cette pompe de charge sont représentés à la figure 9.

Le premier étage élévateur comprend un premier transistor PMOS P105A, dont la source est reliée à la tension d'entrée interne Vin_int. La grille du transistor P105A reçoit le second signal de phase PHI2 à travers un inverseur d'entrée. Le drain du transistor P105A est relié à une première électrode d'un premier condensateur C105A et au drain d'un premier transistor NMOS N105A, dont la source est reliée directement à la borne de masse VSS. La seconde électrode du condensateur C105A est reliée à la source d'un second transistor NMOS NAT105A, dont le drain est relié directement à la tension d'entrée interne Vin_int. Ce transistor NMOS NAT105A est dit "natif", car son seuil de commutation est à 0 V. Il est conducteur, quand la tension entre sa grille et sa source est plus grande ou égale à 0 V. Une tension de grille-source négative doit être appliquée pour le rendre non-conducteur. Les grilles des transistors N105A et NAT105A sont commandées par le premier signal de phase PHI1. Le noeud de connexion entre le premier condensateur C105A et le second transistor NAT105A fournit une tension VA, qui peut être d'une valeur à peu près égale à deux fois la tension d'entrée interne pendant la première durée Tn, qui correspond au second signal de phase PHI2 à l'état logique "1".

Le second étage élévateur comprend un premier transistor PMOS P105B, dont la source est reliée à la tension de sortie VA du premier étage élévateur. La grille du transistor P105B reçoit le second signal de phase PHI2 à travers l'inverseur d'entrée. Le drain du transistor P105B est relié à une première électrode d'un second condensateur C105B et au drain d'un premier transistor NMOS N105B, dont la source est reliée directement à la borne de masse VSS. La seconde électrode du condensateur C105B est reliée à la source d'un second transistor NMOS natif NAT105B, dont le drain est relié directement à la tension d'entrée interne Vin_int. Les grilles des transistors N105B et NAT105B sont commandées par le premier signal de phase PHI1. Le noeud de connexion entre le second condensateur C105B et le second transistor natif NAT105B fournit une tension VB, qui peut être d'une valeur à peu près égale à trois fois la tension d'entrée interne pendant la première durée Tn, qui correspond au second signal de phase PHI2 à l'état logique "1".

Le troisième étage élévateur comprend un premier transistor PMOS P105C, dont la source est reliée à la tension de sortie VB du second étage élévateur. La grille du transistor P105C reçoit le second signal de phase PHI2 à travers l'inverseur d'entrée. Le drain du transistor P105C est relié à une première électrode d'un troisième condensateur C105C et au drain d'un premier transistor NMOS N105C, dont la source est reliée directement à la borne de masse VSS. La seconde électrode du condensateur C105C est reliée à la source d'un second transistor NMOS natif NAT105C, dont le drain est relié directement à la tension d'entrée interne Vin_int. Les grilles des transistors N105C et NAT105C sont commandées par le premier signal de phase PHI1. Le noeud de connexion entre le troisième condensateur C105C et le second transistor natif NAT105C fournit une tension VC, qui peut être d'une valeur à peu près égale à quatre fois la tension d'entrée interne pendant la première durée Tn, qui correspond au second signal de phase PHI2 à l'état logique "1".

Finalement pour la fourniture du signal de commande CTRL, il est prévu un transistor PMOS P105D, dont la source est reliée au noeud de connexion entre le troisième condensateur C105C et le second transistor natif NAT105C du troisième étage élévateur. Le drain de ce transistor PMOS P105 est relié au drain d'un transistor NMOS 105D, dont la source est reliée directement à la borne de masse VSS. La grille du transistor P105D reçoit le second signal de phase PHI2 à travers l'inverseur d'entrée, alors que la grille du transistor N105D reçoit le premier signal de phase PHI1. Le noeud de connexion entre les transistors P105D et N105D fournit le signal de commande CTRL pour commander la conduction du transistor NMOS 11 du convertisseur en figure 4 avec une tension valant à peu près quatre fois la tension d'entrée Vin. Le signal de commande CTRL est donc à l'état logique "1" pendant toute la première durée Tn.

A la figure 10, il est encore montré des courbes, qui représentent la variation de la première durée Tn, de la durée T d'un cycle de commutation et du rapport cyclique d par rapport à la tension d'entrée Vin du convertisseur DC-DC selon l'invention. On peut noter sur cette figure que la période T augmente pour des tensions d'entrée Vin en dessous d'un premier seuil de tension Vth1, et que la première durée Tn augmente pour des tensions d'entrée Vin en dessous d'un second seuil de tension Vth2 inférieur au premier seuil Vth1. Cela a pour conséquence que le rapport cyclique d diminue fortement depuis le premier seuil de tension Vth1 avant de se stabiliser à une valeur basse en dessous du second seuil de tension Vth2. Cela signifie également qu'avec une diminution du rapport cyclique d, il y a une augmentation d'impédance en entrée du convertisseur DC-DC, ce qui est recherché de manière à fonctionner également à faible puissance.

Le premier seuil Vth1 peut être par exemple vers 0.45 V, alors que le second seuil Vth2 peut être par exemple vers 0.3 V. Le rapport cyclique d va donc diminuer fortement, lorsque la tension d'entrée Vin tend vers une très basse tension.

Pour pouvoir déterminer la première durée Tn et la période T de commutation, il est nécessaire que les transistor NMOS N103 de l'élément monostable à la figure 6 soient plus larges que les transistor NMOS N102 de l'oscillateur à la figure 5. De même, les transistors PMOS P103 de l'élément monostable 103 doivent être plus larges que les transistors PMOS P102 de l'oscillateur. A ce titre et comme exemple non limitatif, les paramètres suivants peuvent être proposés :

NMOS N102 de l'oscillateur 102 : W/L = 2 $\mu$m / 1 $\mu$m

(suite)

| | |
|---|---|
| PMOS P102 de l'oscillateur 102 | : W/L = 2 $\mu$m / 1 $\mu$m |
| Résistances R102 de l'oscillateur 102 | : R = 100 kOhms |
| Condensateurs C102 de l'oscillateur 102 | : C = 6.1 pF |
| NMOS N103 du monostable 103 | : W/L = 50 $\mu$m / 0.25 $\mu$m |
| PMOS P103 du monostable 103 | : W/L = 50 $\mu$m / 0.25 $\mu$m |
| Résistances R103 du monostable 103 | : R = 100 kOhms |
| Condensateurs C103 du monostable 103 | : C = 1 pF |

où W définit la largeur de grille, et L définit la longueur de grille. Ces paramètres sont définis avec une technologie d'intégration CMOS ALP à 0.18 $\mu$m.

A partir de la description qui vient d'être faite, plusieurs variantes du convertisseur DC-DC fonctionnant en mode discontinu peuvent être conçues par l'homme du métier sans sortir du cadre de l'invention définie par les revendications. Il peut être prévu d'avoir une simple diode en sortie au lieu d'une diode Schottky, mais la chute de tension est plus grande. Il peut être prévu d'augmenter le nombre d'inverseurs dans l'oscillateur et/ou le nombre d'étages à délai dans l'élément monostable pour augmenter ou diminuer le rapport cyclique.

## Revendications

1. Convertisseur DC-DC (1) à démarrage à basse puissance et basse tension et fonctionnant en mode discontinu, le convertisseur comprenant une inductance (3) pour être reliée à une source d'énergie (2) fournissant une tension d'entrée (Vin) à convertir, un commutateur (11) lié à l'inductance et commandé par un contrôleur (10) et un élément sous forme de diode (12) lié à un noeud de connexion de l'inductance et du commutateur et pour fournir une tension de sortie (Vout),
**caractérisé en ce que** le contrôleur (10) comprend au moins un oscillateur (102) et un élément monostable (103), qui sont alimentés par la tension d'entrée (Vin) fournie par la source d'énergie (2),
**en ce que** l'oscillateur (102) est configuré pour fournir un signal d'oscillation (OSC), dont la période d'oscillation détermine une période T d'un cycle de commutation du commutateur (11),
**en ce que** l'élément monostable (103) est configuré pour recevoir le signal d'oscillation (OSC) de l'oscillateur (102) afin de déterminer une première durée Tn de conduction du commutateur (11), durant laquelle un courant croissant (IL) traverse l'inductance (3), et
**en ce qu'**en fonction des éléments constitutifs de l'oscillateur (102) et de l'élément monostable (103), un rapport cyclique d = Tn/T entre la première durée de conduction du commutateur et la période d'oscillation de l'oscillateur diminue, quand la tension d'entrée diminue avec une augmentation de l'impédance d'entrée du convertisseur DC-DC.

2. Convertisseur DC-DC (1) selon la revendication 1, **caractérisé en ce que** l'oscillateur (102) est un oscillateur en anneau, qui comprend un nombre N d'étages à inverseur successifs, où N est un nombre entier impair supérieur à 1, le dernier étage à inverseur étant relié en boucle au premier étage à inverseur.

3. Convertisseur DC-DC (1) selon la revendication 2, **caractérisé en ce que** le nombre N d'étages à inverseur est égal à 5, et **en ce qu'**un inverseur de sortie (1025) est connecté au dernier étage à inverseur (1024) pour fournir le signal d'oscillation (OSC).

4. Convertisseur DC-DC (1) selon la revendication 2, **caractérisé en ce que** chaque étage à inverseur comprend un réseau RC, qui est composé d'une résistance (R102) et d'un condensateur (C102), relié à un inverseur correspondant.

5. Convertisseur DC-DC (1) selon la revendication 4, **caractérisé en ce que** chaque inverseur comprend un transistor PMOS (P102) monté en série avec un transistor NMOS (N102) entre une borne de tension d'entrée interne (Vin_int) de l'oscillateur et une borne de masse (VSS), **en ce que** la résistance est reliée d'une part à des grilles des deux transistors PMOS et NMOS du même étage et d'autre part à des drains des transistors PMOS et NMOS d'un étage précédent, et **en ce que** le condensateur est relié entre les grilles des transistors PMOS et NMOS et la borne de masse.

6. Convertisseur DC-DC (1) selon la revendication 1, **caractérisé en ce que** l'élément monostable (103) comprend un nombre M d'étages de délai successifs (1030, 1031, 1032), où M est un nombre entier supérieur ou égal à 1, pour la détermination de la première durée Tn d'enclenchement du commutateur (11).

7. Convertisseur DC-DC (1) selon la revendication 6, **caractérisé en ce que** le nombre M d'étages de délai est égal à 3.

8. Convertisseur DC-DC (1) selon la revendication 6, **caractérisé en ce que** chaque étage de délai comprend un inverseur, qui est composé d'un transistor PMOS (P103) monté en série avec un transistor NMOS (N103) entre une borne de tension d'entrée interne (Vin_int) de l'élément monostable (103) et une borne de masse (VSS), ainsi qu'un réseau RC en entrée, et **en ce que** le réseau RC comprend une résistance (R103) entre une entrée de chaque étage et des grilles reliées des transistors PMOS et NMOS, et un condensateur (C103) relié aux grilles des transistors PMOS et NMOS et à la borne de masse, et **en ce qu'**une sortie de chaque étage est un noeud de connexion des drains des transistors PMOS et NMOS.

9. Convertisseur DC-DC (1) selon la revendication 6, **caractérisé en ce que** chaque étage de délai comprend en outre une bascule du type RS (1033) recevant à une première entrée le signal d'oscillation (OSC) de l'oscillateur (102) et à une seconde entrée un signal de sortie provenant du dernier étage à délai (1032), de manière à fournir en sortie un signal de contrôle (MONO) pour la détermination de la première durée Tn.

10. Convertisseur DC-DC (1) selon la revendication 9, **caractérisé en ce que** le premier étage de délai (1030) reçoit le signal d'oscillation (OSC) de l'oscillateur (102) par l'intermédiaire d'un inverseur d'entrée (1034), **en ce que** la seconde entrée de la bascule RS reçoit un signal de sortie du dernier étage à délai (1032) par l'intermédiaire d'un non-inverseur intermédiaire (1035), et **en ce que** le signal de contrôle (MONO) est fourni en sortie de l'élément monostable depuis la sortie de la bascule RS par l'intermédiaire d'un non-inverseur de sortie (1036).

11. Convertisseur DC-DC (1) selon la revendication 1, **caractérisé en ce que** le commutateur (11) est un transistor MOS, tel qu'un transistor NMOS, relié entre l'inductance (3) et une borne de masse (VSS), dont une grille reçoit un signal de commande (CTRL) du contrôleur (10) pour la commande de la première durée Tn de conduction du transistor MOS, et **en ce que** l'élément sous forme de diode (12) est une diode Schottky reliée entre un noeud de connexion de l'inductance (3) et du transistor MOS (11) et une borne de sortie (Vout) du convertisseur DC-DC.

12. Convertisseur DC-DC (1) selon la revendication 1, **caractérisé en ce que** le contrôleur (10) comprend un générateur de phases (104) commandé par un signal de contrôle (MONO) de l'élément monostable (103), et une pompe de charge interne (105), qui est cadencée par deux signaux de phases (PHI1, PHI2) du générateur de phases (104), et commande par un signal de commande (CTRL) le commutateur (11), qui est un transistor MOS.

13. Convertisseur DC-DC (1) selon la revendication 12, **caractérisé en ce que** le contrôleur (10) comprend un commutateur d'entrée (100), qui est un transistor PMOS, dont une source est reliée à une borne de le tension d'entrée (Vin) du convertisseur pour recevoir la tension d'entrée de la source d'énergie, et un drain pour fournir la tension d'entrée interne (Vin_int) pour l'oscillateur (102), l'élément monostable (103), le générateur de phases (104) et la pompe de charge interne (105), **en ce qu'**une grille du transistor PMOS (100) est commandée par un signal d'entrée d'une unité externe depuis une borne d'entrée (DIS) du contrôleur, afin de rendre conducteur le transistor PMOS pour le fonctionnement du contrôleur ou non-conducteur dans un mode de pause du contrôleur.

14. Convertisseur DC-DC (1) selon la revendication 13, **caractérisé en ce que** le contrôleur (10) comprend également un premier transistor NMOS (101), qui est relié entre la ligne de tension d'entrée interne (Vin_int) et la borne de masse (VSS), et un second transistor NMOS (106), qui est relié entre la grille du transistor NMOS (11) et la borne de masse (VSS), **en ce que** des grilles des premier et second transistors NMOS sont reliées à la grille du transistor PMOS de manière à être rendus conducteurs par le signal d'entrée (DIS) de l'unité externe, quand le transistor PMOS est non-conducteur, et inversement.

15. Convertisseur DC-DC (1) selon la revendication 1, **caractérisé en ce qu'**au moins le contrôleur (10) et le commutateur (11) d'un bloc principal du convertisseur DC-DC sont réalisés dans un même circuit intégré dans une technologie CMOS.

16. Convertisseur DC-DC (1) selon l'une des revendications 1 et 15, **caractérisé en ce que** le rapport cyclique d = Tn/T entre la première durée Tn de conduction du commutateur (11) et la période T d'oscillation de l'oscillateur (102) diminue avec une augmentation de la période T, quand la tension d'entrée (Vin) diminue en dessous d'un premier seuil de tension bas (Vth1).

**17.** Convertisseur DC-DC (1) selon la revendication 16, **caractérisé en ce que** la première durée Tn augmente, quand la tension d'entrée (Vin) diminue en dessous d'un second seuil de tension bas (Vth2) inférieur au premier seuil de tension (Vth1).

**18.** Convertisseur DC-DC (1) selon la revendication 17, **caractérisé en ce que** le premier seuil de tension (Vth1) est de l'ordre de 0.45 V, et **en ce que** le second seuil de tension (Vth2) est de l'ordre de 0.3 V.

**19.** Convertisseur DC-DC (1) selon la revendication 17, **caractérisé en ce que** des transistors (N103, P103) de l'élément monostable (103) sont réalisés de dimensions plus larges que des transistors (N102, P102) de l'oscillateur (102) de manière à avoir une augmentation de la première durée Tn par rapport à une augmentation de la période T d'oscillation à une tension d'entrée (Vin) plus basse.

**20.** Procédé de mise en action d'un convertisseur DC-DC (1) selon l'une des revendications précédentes, pour lequel le convertisseur à démarrage à basse puissance et basse tension fonctionne en mode discontinu et comprend une inductance (3) pour être reliée à une source d'énergie (2) fournissant une tension d'entrée (Vin) à convertir, un commutateur (11) lié à l'inductance et commandé par un contrôleur (10) et un élément sous forme de diode (12) lié à un noeud de connexion de l'inductance et du commutateur et pour fournir une tension de sortie (Vout), le procédé comprenant les étapes consistant à :

- commander la conduction du commutateur (11) dans une première phase par un signal de commande (CTRL) du contrôleur (10) pendant une première durée Tn, qui est déterminée par l'élément monostable (103) du contrôleur pour avoir un courant croissant (IL) dans l'inductance (3),
- arrêter la conduction du commutateur (11) dans une seconde phase pendant une seconde durée Tp pour avoir un courant décroissant (IL) induit dans l'inductance (3), qui est transféré à travers l'élément sous forme de diode pour fournir une tension de sortie (Vout), et
- une fois que le courant dans l'inductance (3) est nul, une troisième phase neutre commence sans aucun courant entrant ou sortant du convertisseur DC-DC jusqu'au terme d'un période T d'un cycle de commutation du commutateur,

**caractérisé en ce que** le rapport cyclique d = Tn/T entre la première durée Tn de conduction du commutateur et la période T d'oscillation de l'oscillateur diminue, quand la tension d'entrée (Vin) diminue de manière à avoir une augmentation de l'impédance d'entrée du convertisseur DC-DC.

**21.** Procédé selon la revendication 20, **caractérisé en ce que** le rapport cyclique d diminue quand la tension d'entrée (Vin) diminue en dessous d'un premier seuil de tension (Vth1) avec une augmentation de la période T d'oscillation et sans variation de la première durée Tn.

**22.** Procédé selon la revendication 21, **caractérisé en ce que** la première durée Tn augmente quand la tension d'entrée (Vin) diminue en dessous d'un second seuil de tension (Vth2) inférieur au premier seuil de tension (Vth1).

**Patentansprüche**

**1.** Gleichspannungswandler (1) mit Niedrigleistungs- und Niedrigspannungsanlauf, der im diskontinuierlichen Betrieb arbeitet, wobei der Wandler eine mit einer Energiequelle (2) zu verbindenden Induktivität (3), die eine umzusetzende Eingangsspannung (Vin) liefert, einen Schalter (11), der mit der Induktivität verbunden ist und durch eine Steuereinheit (10) gesteuert wird, und ein Element in Form einer Diode (12) umfasst, das mit einem Verbindungsknoten der Induktivität und des Schalters verbunden ist, um eine Ausgangsspannung (Vout) zu liefern.
**dadurch gekennzeichnet, dass** die Steuereinheit (10) mindestens einen Oszillator (102) und ein monostabiles Element (103) enthält, die mit der von der Energiequelle (2) gelieferten Eingangsspannung (Vin) versorgt werden, dass der Oszillator (102) konfiguriert ist, ein Oszillationssignal (OSC) zu liefern, dessen Oszillationsperiode eine Periode T eines Schaltzyklus des Schalters (11) bestimmt,
dass das monostabile Element (103) konfiguriert ist, das Oszillationssignal (OSC) des Oszillators (102) zu empfangen, um eine erste Durchlassdauer Tn des Schalters (11) zu bestimmen, während derer durch die Induktivität (3) ein zunehmender Strom (IL) fließt, und
dass in Abhängigkeit von den Bestandteilen des Oszillators (102) und des monostabilen Elements (103) ein Tastgrad d = Tn/T zwischen der ersten Durchlassdauer des Schalters und der Oszillationsperiode des Oszillators abnimmt, wenn die Eingangsspannung abnimmt mit einer Zunahme der Eingangsimpedanz des Gleichspannungswandlers.

2. Gleichspannungswandler (1) nach Anspruch 1, **dadurch gekennzeichnet, dass** der Oszillator (102) ein Ringoszillator ist, der eine Anzahl N aufeinander folgender Inverterstufen umfasst, wobei N eine ungerade ganze Zahl größer als 1 ist, wobei die letzte Inverterstufe in einer Schleife mit der ersten Inverterstufe verbunden ist.

3. Gleichspannungswandler (1) nach Anspruch 2, **dadurch gekennzeichnet, dass** die Anzahl N von Inverterstufen gleich 5 ist und dass ein Ausgangsinverter (1025) mit der letzten Inverterstufe (1024) verbunden ist, um das Oszillationssignal (OSC) zu liefern.

4. Gleichspannungswandler (1) nach Anspruch 2, **dadurch gekennzeichnet, dass** jede Inverterstufe ein RC-Netzwerk enthält, das aus einem Widerstand (R102) und einem Kondensator (C102) gebildet ist und mit einem entsprechenden Inverter verbunden ist.

5. Gleichspannungswandler (1) nach Anspruch 4, **dadurch gekennzeichnet, dass** jeder Inverter einen PMOS-Transistor (P102) enthält, der mit einem NMOS-Transistor (N102) zwischen einem inneren Eingangsspannungsanschluss (Vin_int) des Oszillators und einem Masseanschluss (VSS) in Reihe geschaltet ist, dass der Widerstand einerseits mit den Gates des PMOS- und des NMOS-Transistors derselben Stufe und andererseits mit den Drains des PMOS- und des NMOS-Transistors einer vorhergehender Stufe verbunden ist und dass der Kondensator zwischen die Gates des PMOS- und des NMOS-Transistors und den Masseanschluss geschaltet ist.

6. Gleichspannungswandler (1) nach Anspruch 1, **dadurch gekennzeichnet, dass** das monostabile Element (103) eine Anzahl M aufeinander folgender Verzögerungsstufen (1030, 1031, 1032) enthält, wobei M eine ganze Zahl größer oder gleich 1 ist, um die erste Auslösedauer Tn des Schalters (11) zu bestimmen.

7. Gleichspannungswandler (1) nach Anspruch 6, **dadurch gekennzeichnet, dass** die Anzahl M von Verzögerungsstufen gleich 3 ist.

8. Gleichspannungswandler (1) nach Anspruch 6, **dadurch gekennzeichnet, dass** jede Verzögerungsstufe einen Inverter enthält, der aus einem mit einem NMOS-Transistor (N103) zwischen einem inneren Eingangsspannungsanschluss (Vin_int) des monostabilen Elements (103) und einem Masseanschluss (VSS) in Reihe geschalteten PMOS-Transistor (P103) und aus einem Eingangs-RC-Netzwerk gebildet ist, und dass das RC-Netzwerk einen Widerstand (R103) zwischen einem Eingang jeder Stufe und den verbundenen Gates des PMOS- und des NMOS-Transistors und einen Kondensator (C103) enthält, der mit den Gates des PMOS- und des NMOS-Transistors und dem Masseanschluss verbunden ist, und dass ein Ausgang jeder Stufe ein Verbindungsknoten der Drains des PMOS- und des NMOS-Transistors ist.

9. Gleichspannungswandler (1) nach Anspruch 6, **dadurch gekennzeichnet, dass** jede Verzögerungsstufe ferner ein RS-Flip-Flop (1033) enthält, das an einem ersten Eingang das Oszillationssignal (OSC) des Oszillators (102) und an einem zweiten Eingang ein von der letzten Verzögerungsstufe (1032) stammendes Ausgangssignal empfängt, um am Ausgang ein Steuersignal (MONO) für die Bestimmung der ersten Dauer Tn zu liefern.

10. Gleichspannungswandler (1) nach Anspruch 9, **dadurch gekennzeichnet, dass** die erste Verzögerungsstufe (1030) das Oszillationssignal (OSC) von dem Oszillator (102) über einen Eingangsinverter (1034) empfängt, dass der zweite Eingang des RS-Flip-Flops ein Ausgangssignal von der letzten Verzögerungsstufe (1032) über einen Zwischen-Nichtinverter (1035) empfängt und dass das Steuersignal (MONO) am Ausgang des monostabilen Elements von dem Ausgang des RS-Flip-Flops über einen Ausgangs-Nichtinverter (1036) geliefert wird.

11. Gleichspannungswandler (1) nach Anspruch 1, **dadurch gekennzeichnet, dass** der Schalter (11) ein MOS-Transistor wie etwa ein NMOS-Transistor ist, der zwischen die Induktivität (3) und einen Masseanschluss (VSS) geschaltet ist und dessen Gate ein Steuersignal (CTRL) von der Steuereinheit (10) für die Steuerung der ersten Durchlassdauer Tn des MOS-Transistors empfängt und dass das Element in Form einer Diode (12) eine Schottky-Diode ist, die zwischen einen Verbindungsknoten der Induktivität (3) und des MOS-Transistors (11) und einen Ausgangsanschluss (Vout) des Gleichspannungswandlers geschaltet ist.

12. Gleichspannungswandler (1) nach Anspruch 1, **dadurch gekennzeichnet, dass** die Steuereinheit (10) einen von einem Steuersignal (MONO) des monostabilen Elements (103) gesteuerten Phasengenerator (104) und eine innere Ladungspumpe (105) enthält, die durch zwei Phasensignale (PHI1, PHI2) des Phasengenerators (104) getaktet wird und durch ein Steuersignal (CTRL) des Schalters (11), der ein MOS-Transistor ist, gesteuert wird.

**13.** Gleichspannungswandler (1) nach Anspruch 12, **dadurch gekennzeichnet, dass** die Steuereinheit (10) einen Eingangsschalter (100) umfasst, der ein PMOS-Transistor ist, dessen Source mit einem Anschluss der Eingangsspannung (Vin) des Wandlers verbunden ist, um die Eingangsspannung von der Energiequelle zu empfangen, und einen Drain umfasst, um die innere Eingangsspannung (Vin_int) für den Oszillator (102), das monostabile Element (103), den Phasengenerator (104) und die innere Ladungspumpe (105) zu liefern, und dass ein Gate des PMOS-Transistors (100) durch ein Eingangssignal einer externen Einheit von einem Eingangsanschluss (DIS) der Steuereinheit gesteuert wird, um den PMOS-Transistor für die Funktion der Steuereinheit leitend oder in einer Pausebetriebsart der Steuereinheit nicht leitend zu schalten.

**14.** Gleichspannungswandler (1) nach Anspruch 13, **dadurch gekennzeichnet, dass** die Steuereinheit (10) ferner einen ersten NMOS-Transistor (101) enthält, der zwischen die Leitung der inneren Eingangsspannung (Vin_int) und den Masseanschluss (VSS) geschaltet ist, und einen zweiten NMOS-Transistor (106) enthält, der zwischen das Gate des NMOS-Transistors (11) und den Masseanschluss (VSS) geschaltet ist, und dass die Gates des ersten und des zweiten NMOS-Transistors mit dem Gate des PMOS-Transistors in einer Weise verbunden sind, dass sie durch das Eingangssignal (DIS) der externen Einheit leitend geschaltet werden, wenn der PMOS-Transistor nicht leitend ist, und umgekehrt.

**15.** Gleichspannungswandler (1) nach Anspruch 1, **dadurch gekennzeichnet, dass** zumindest die Steuereinheit (10) und der Schalter (11) eines Hauptblocks des Gleichspannungswandlers in derselben integrierten Schaltung in CMOS-Technologie ausgebildet sind.

**16.** Gleichspannungswandler (1) nach einem der Ansprüche 1 und 15, **dadurch gekennzeichnet, dass** der Tastgrad $d = Tn/T$ zwischen der ersten Durchlassdauer Tn des Schalters (11) und der Oszillationsperiode T des Oszillators (102) bei einer Zunahme der Periode T abnimmt, wenn die Eingangsspannung (Vin) unter einen ersten tiefen Spannungsschwellenwert (Vth1) fällt.

**17.** Gleichspannungswandler (1) nach Anspruch 16, **dadurch gekennzeichnet, dass** die erste Dauer Tn zunimmt, wenn die Eingangsspannung (Vin) unter einen zweiten tiefen Spannungsschwellenwert (Vth2), der niedriger als der erste Spannungsschwellenwert (Vth1) ist, fällt.

**18.** Gleichspannungswandler (1) nach Anspruch 17, **dadurch gekennzeichnet, dass** der erste Spannungsschwellenwert (Vth1) in der Größenordnung von 0,45 V liegt und dass der zweite Spannungsschwellenwert (Vth2) in der Größenordnung von 0,3 V liegt.

**19.** Gleichspannungswandler (1) nach Anspruch 17, **dadurch gekennzeichnet, dass** die Transistoren (N103, P103) des monostabilen Elements (103) mit größeren Abmessungen als die Transistoren (N102, P102) des Oszillators (102) hergestellt sind, um eine Zunahme der ersten Dauer Tn in Bezug auf eine Zunahme der Oszillationsperiode T bei einer niedrigeren Eingangsspannung (Vin) zu erhalten.

**20.** Verfahren zum Betreiben eines Gleichspannungswandlers (1) nach einem der vorhergehenden Ansprüche, für das der Wandler mit Niedrigleistungs- und Niedrigspannungsanlauf in einer diskontinuierlichen Betriebsart arbeitet und eine Induktivität (3) für die Verbindung mit einer Energiequelle (2), die eine umzusetzende Eingangsspannung (Vin) liefert, einen Schalter (11), der mit der Induktivität verbunden ist und durch eine Steuereinheit (10) gesteuert wird, und ein Element in Form einer Diode (12) umfasst, das mit einem Verbindungsknoten der Induktivität und des Schalters verbunden ist und eine Ausgangsspannung (Vout) liefert, wobei das Verfahren die folgenden Schritte umfasst:

  - Befehlen des leitenden Zustands des Schalters (11) in einer ersten Phase durch ein Steuersignal (CTRL) der Steuereinheit (10) während einer ersten Dauer Tn, die durch das monostabile Element (103) der Steuereinheit bestimmt wird, um in der Induktivität (3) einen zunehmenden Strom zu erhalten,
  - Beenden des leitenden Zustands des Schalters (11) in einer zweiten Phase während einer zweiten Dauer Tp, um einen in der Induktivität (3) induzierten abnehmenden Strom (IL) zu erhalten, der über das Element in Form einer Diode weitergeleitet wird, um eine Ausgangsspannung (Vout) zu liefern, und
  - sobald der Strom in der Induktivität (3) null ist, beginnt eine dritte neutrale Phase ohne jeglichen Strom, der in den Gleichspannungswandler eintritt oder aus diesem austritt, bis eine Periode T eines Schaltzyklus des Schalters beendet ist,

  **dadurch gekennzeichnet, dass** der Tastgrad $d = Tn/T$ zwischen der ersten Durchlassdauer Tn des Schalters und der Oszillationsperiode T des Oszillators abnimmt, wenn die Eingangsspannung (Vin) abnimmt, um eine Zunahme der Eingangsimpedanz des Gleichspannungswandlers zu erhalten.

21. Verfahren nach Anspruch 20, **dadurch gekennzeichnet, dass** der Tastgrad d abnimmt, wenn die Eingangsspannung (Vin) bei einer Zunahme der Oszillationsperiode T und ohne Veränderung der ersten Dauer Tn unter einen ersten Spannungsschwellenwert (Vth1) fällt.

22. Verfahren nach Anspruch 21, **dadurch gekennzeichnet, dass** die erste Dauer Tn zunimmt, wenn die Eingangsspannung (Vin) unter einen zweiten Spannungsschwellenwert (Vth2) fällt, der kleiner als der erste Spannungsschwellenwert (Vth1) ist.

**Claims**

1. DC-DC converter (1) with low start-up power and voltage and operating in discontinuous mode, the converter including an inductor (3) for connection to a power source (2) providing an input voltage (Vin) to be converted, a switch (11) connected to the inductor and controlled by a controller (10) and a diode element (12) connected to a connection node of the inductor and the switch to provide an output voltage (Vout),
**characterized in that** the controller (10) includes at least an oscillator (102) and a monostable element (103), which are powered by the input voltage (Vin) provided by the power source (2),
**in that** the oscillator (102) is configured to provide an oscillation signal (OSC), whose oscillation period determines a period T of one switching cycle of the switch (11),
**in that** the monostable element (103) is configured to receive the oscillation signal (OSC) from the oscillator (102) in order to determine a first duration Tn of conduction of the switch (11), during which an increasing current (IL) flows through the inductor (3), and
**in that**, depending on the constituent elements of the oscillator (102) and of the monostable element (103), a duty cycle d = Tn/T between the first duration of conduction of the switch and the oscillation period of the oscillator decreases, when the input voltage decreases with an increase in the input impedance of the DC-DC converter.

2. DC-DC converter (1) according to claim 1, **characterized in that** the oscillator (102) is a ring oscillator, which includes a number N of successive inverter stages, where N is an integer odd number greater than 1, the last inverter stage being connected in a loop to the first inverter stage.

3. DC-DC converter (1) according to claim 2, **characterized in that** the number N of inverter stages is equal to 5, and **in that** an output inverter (1025) is connected to the last inverter stage (1024) to provide the oscillation signal (OSC).

4. DC-DC converter (1) according to claim 2, **characterized in that** each inverter stage includes an RC network, which is formed of a resistor (R102) and a capacitor (C102) connected to a corresponding inverter.

5. DC-DC converter (1) according to claim 4, **characterized in that** each inverter includes a PMOS transistor (P102) mounted in series with an NMOS transistor (N102) between an internal input voltage terminal (Vin_int) of the oscillator and an earth terminal (VSS), **in that** the resistor is connected on one hand to gates of the two PMOS and NMOS transistors of the same stage, and on the other hand to drains of the PMOS and NMOS transistors of a preceding stage, and **in that** the capacitor is connected between the gates of the PMOS and NMOS transistors and the earth terminal.

6. DC-DC converter (1) according to claim 1, **characterized in that** the monostable element (103) includes a number M of successive delay stages (1030, 1031, 1032), wherein M is an integer number greater than or equal to 1, for the determination of the first duration Tn of actuation of the switch (11).

7. DC-DC converter (1) according to claim 6, **characterized in that** the number M of delay stages is equal to 3.

8. DC-DC converter (1) according to claim 6, **characterized in that** each delay stage includes an inverter, which is formed of a PMOS transistor (P103) mounted in series with an NMOS transistor (N103) between an internal input voltage terminal (Vin_int) of the monostable element (103) and an earth terminal (VSS), and an RC input network, and **in that** the RC network includes a resistor (R103) between an input of each stage and connected gates of the PMOS and NMOS transistors, and a capacitor (C103) connected to the gates of the PMOS and NMOS transistors and to the earth terminal, and **in that** an output of each stage is a connection node of the drains of the PMOS and NMOS transistors.

9. DC-DC converter (1) according to claim 6, **characterized in that** each delay stage further includes an RS flip-flop (1033) receiving, at a first input, the oscillation signal (OSC) from the oscillator (102) and, at a second input, an output signal from the last delay stage (1032) in order to provide, at output, a control signal (MONO) for the determination of the first duration Tn.

10. DC-DC converter (1) according to claim 9, **characterized in that** the first delay stage (1030) receives the oscillation signal (OSC) from the oscillator (102) via an input inverter (1034), **in that** the second input of the RS flip-flop receives an output signal from the last delay stage (1032) via an intermediate non-inverter (1035), and **in that** the control signal (MONO) is provided at the monostable element output from the RS flip-flop output via a non-inverter of output (1036).

11. DC-DC converter (1) according to claim 1, **characterized in that** the switch (11) is a MOS transistor, such as an NMOS transistor, connected between the inductor (3) and an earth terminal (VSS), whose gate receives a control signal (CTRL) from the controller (10) for control of the first duration Tn of conduction of the MOS transistor, and **in that** the diode element (12) is a Schottky diode connected between a connection node of the inductor (3) and of the MOS transistor (11) and an output terminal (Vout) of the DC-DC converter.

12. DC-DC converter (1) according to claim 1, **characterized in that** the controller (10) includes a phase generator (104) controlled by a control signal (MONO) from the monostable element (103), and an internal charge pump (105), which is clocked by two phase signals (PHI1, PHI2) from the phase generator (104), and controls, via a control signal (CTRL), the switch (11), which is a MOS transistor.

13. DC-DC converter (1) according to claim 12, **characterized in that** the controller (10) includes an input switch (100), which is a PMOS transistor, whose source is connected to an input voltage terminal (Vin) of the converter to receive the input voltage from the power source, and a drain for providing the internal input voltage (Vin_int) for the oscillator (102), the monostable element (103), the phase generator (104) and the internal charge pump (105), **in that** a gate of the PMOS transistor (100) is controlled by an input signal from an external unit from an input terminal (DIS) of the controller, in order to make the PMOS transistor conductive for the operation of the controller, or non-conductive in a pause mode of the controller.

14. DC-DC converter (1) according to claim 13, **characterized in that** the controller (10) also includes a first NMOS transistor (101), which is connected between the internal input voltage line (Vin_int) and the earth terminal (VSS), and a second NMOS transistor (106), which is connected between the gate of the NMOS transistor (11) and the earth terminal (VSS), **in that** gates of the first and second NMOS transistors are connected to the gate of the PMOS transistor in order to be made conductive by the input signal (DIS) from the external unit, when the PMOS transistor is non-conductive, and vice versa.

15. DC-DC converter (1) according to claim 1, **characterized in that** at least the controller (10) and the switch (11) of a main block of the DC-DC converter are made in the same integrated circuit in CMOS technology.

16. DC-DC converter (1) according to any of claims 1 and 15, **characterized in that** the duty cycle d = Tn/T between the first period Tn of conduction of the switch (11) and the oscillation period T of the oscillator (102) decreases with an increase in period T, when the input voltage (Vin) drops below a first low voltage threshold (Vth1).

17. DC-DC converter (1) according to claim 16, **characterized in that** the first duration Tn increases, when the input voltage (Vin) drops below a second low voltage threshold (Vth2) lower than the first voltage threshold (Vth1).

18. DC-DC converter (1) according to claim 17, **characterized in that** the first voltage threshold (Vth1) is around 0.45 V, and **in that** the second voltage threshold (Vth2) is around 0.3 V.

19. DC-DC converter (1) according to claim 17, **characterized in that** the monostable element (103) transistors (N103, P103) are made in wider dimensions than the oscillator (102) transistors (N102, P102) in order to obtain an increase in the first duration Tn with respect to an increase in the oscillation period T at a lower input voltage (Vin).

20. Method for actuation of a DC-DC converter (1) according to any of the preceding claims, wherein the converter with low start-up power and voltage operates in discontinuous mode and includes an inductor (3) for connection to a power source (2) providing an input voltage (Vin) to be converted, a switch (11) connected to the inductor and controlled by a controller (10) and a diode element (12) connected to a connection node of the inductor and the switch to provide an output voltage (Vout), the method including the steps of:

- controlling the conduction of the switch (11) in a first phase by a control signal (CTRL) from the controller (10) during a first duration Tn, which is determined by the monostable element (103) of the controller to obtain an increasing current (IL) in the inductor (3),
- stopping the conduction of the switch (11) in a second phase during a second duration Tp to induce a decreasing current (IL) in the inductor (3), which is transferred through the diode element to provide an output voltage (Vout), and
- once the current in the inductor (3) is zero, a third neutral phase starts with no current entering or leaving the DC-DC converter until the end of a switching cycle period T of the switch,

**characterized in that** the duty cycle d = Tn/T between the first duration Tn of conduction of the switch and the oscillation period T of the oscillator decreases when the input voltage (Vin) decreases in order to obtain an increase in the input impedance of the DC-DC converter.

21. Method according to claim 20, **characterized in that** the duty cycle d decreases when the input voltage (Vin) drops below a first voltage threshold (Vth1) with an increase in the oscillation period T and with no variation in the first duration Tn.

22. Method according to claim 21, **characterized in that** the first duration Tn increases, when the input voltage (Vin) drops below a second voltage threshold (Vth2) lower than the first voltage threshold (Vth1).

# Fig. 1

# Fig. 2

Fig. 3

Iin = f(Vin) VS Isource = f(Vin)

EP 3 101 793 B1

Fig. 4

Convertisseur DC-DC — 1

LX · Vout

10 — Contrôleur

PMOS — 100
Vin · Vin_int
101 — NMOS

102 — Oscillateur — OSC
103 — Mono stable — MONO
104 — Générateur de phases — PHI1 / PHI2
105 — Pompe interne — CTRL

11 — NMOS
12
106

DIS

VSS

EP 3 101 793 B1

# Fig. 5

# Fig. 6

## Fig. 7

104

Générateur de phases

MONO

1040

1043    1041

1045    PHI2

1044

1042    1046    PHI1

## Fig. 8

105

Vin_int    Pompe interne

PHI1

NAT105A    NAT105B    NAT105C

VA    VB    VC

C105A    C105B    C105C

P105A    P105B    P105C    P105D    CTRL

PHI2

N105A    N105B    N105C    N105D

VSS

## Fig. 9

## Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2104213 B1

- US 20120049823 A1

**Littérature non-brevet citée dans la description**

- Energy Harvesters and Energy Processing Circuits. **YOGESH RAMADASS.** Texas Instrument dans le Tutorial 2013 T3. Institute of Electrical and Electronics Engineers of University of Pennsylvania ISSCC, 17 Février 2013